(19) Europäisches Patentamt
European Patent Office
Office européen des brevets

(11) EP 0 708 120 B1

(12) FASCICULE DE BREVET EUROPEEN

(45) Date de publication et mention de la délivrance du brevet:
**03.06.1998 Bulletin 1998/23**

(51) Int Cl.[6]: **C08F 220/24**, C08F 265/04, C08F 285/00

(21) Numéro de dépôt: **95402315.6**

(22) Date de dépôt: **17.10.1995**

# (54) Latex et mélanges de latex acryliques et méthacryliques fluorés

Latex und Mischungen von fluorenthaltenden Acryl- und Methacryllatex

Latexes and blends of fluorinated acrylic and methacrylic latexes

(84) Etats contractants désignés:
**AT BE CH DE DK ES FR GB GR IE IT LI LU NL PT SE**

(30) Priorité: **18.10.1994 FR 9412431**

(43) Date de publication de la demande:
**24.04.1996 Bulletin 1996/17**

(73) Titulaire: **ELF ATOCHEM S.A.
92800 Puteaux, Hauts-de-Seine (FR)**

(72) Inventeurs:
- **Feret, Bruno
F-92300 Levallois Perret (FR)**
- **Sarrazin, Laure
F-27800 Boisney (FR)**
- **Vanoye, Didier
F-27300 Bernay (FR)**

(74) Mandataire: **Chaillot, Geneviève
Cabinet CHAILLOT,
16-20, avenue de L'Agent Sarre,
B.P. 74
92703 Colombes Cédex (FR)**

(56) Documents cités:
**EP-A- 0 312 964** **EP-A- 0 393 480**

- **BASE DE DONNEES "CHEMICAL ABSTRACTS" (SERVEUR: STN), abrégé 111: 134 961, Colombus, OH, USA; & JP-A-01 040 510 (NITTO DENKO CORP.) 10 Février 1989**
- **BASE DE DONNEES "CHEMICAL ABSTRACTS" (SERVEUR:STN), abrégé 101: 193 052, Colombus, OH, USA; & JP-A-59 122 512 (MITSUBISHI RAYON CO., LTD)16 Juillet 1984**
- **BASE DE DONNEES "CHEMICAL ABSTRACTS" (SERVEUR: STN), abrégé 115: 233 147, Colombus, OH, USA; & JP-A-03 109 410 (NITTO DENKO CORP.) 9 Mai 1991**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 708 120 B1

Printed by Jouve, 75001 PARIS (FR)

## Description

La présente invention porte sur des latex et mélanges de latex acryliques et méthacryliques fluorés à faible teneur en fluor, ainsi que sur leurs procédés de fabrication.

Par "latex", on entend des dispersions aqueuses de particules polymères, telles qu'elles sont obtenues par polymérisation en émulsion.

Ces dispersions entrent dans des formulations de compositions destinées à être appliquées par exemple par projection, taloche, rouleaux, brosse, spray, tige filetée, imprégnation, pour réaliser un dépôt uniforme selon l'épaisseur désirée, sur des substrats, tels que les bétons, briques, parpaings, bois, textiles synthétiques, cuirs, métaux, anciennes peintures, etc., pour en assurer, après séchage à une température voisine de la température ambiante, des revêtements protecteurs hydrophobes. A titre d'exemples de ces compositions pour revêtements, on peut citer les peintures à appliquer sur les substrats les plus divers dans le domaine du bâtiment, tels que les peintures extérieures, les crépis, etc., les vernis pour cuirs, les apprêts pour cuirs et textiles, les vernis pour bois, etc. La présente invention concerne également toutes ces applications.

Comme monomères susceptibles d'apporter une performance hydrophobe dans de tels latex, on peut citer les monomères de formule (I) :

$$H_2C = \overset{\displaystyle R^1}{\overset{|}{C}} - \underset{\underset{\displaystyle O}{\|}}{C} - O - (CH_2)_n - R^2 \qquad \text{(I)}$$

dans laquelle :

- $R^1$ représente $CH_3$ ou H ;
- $R^2$ représente un radical alkyle perfluoré en $C_1$-$C_{10}$ ; et
- $0 < n \leq 4$,

et notamment, le (méth)acrylate de 2,2,2-trifluoroéthyle.

La polymérisation du méthacrylate de trifluoro-éthyle a fait l'objet de différentes études pour obtenir des dispersions de polymères utilisables comme supports de substances physiologiquement actives, stables en milieu salin (JP-A-61-019 615 ; EP-A-182 516 ; JP-A-61-274 260 ; JP-A-62-100 511), comme agents antistatiques pour développeurs électrophotographiques (JP-A-63-092 623 ; JP-A-63-092 606), et comme revêtements (FR-A-2 656 316 ; JP-A-05 140 237 ; JP-A-04 248 821 ; EP-A-408 422).

La préparation de dispersions de particules structurées à base de (méth)actylate de 2,2,2-trifluoroéthyle a également été décrite pour obtenir des particules possédant trois ou quatre couches de natures différentes et possédant une fraction pondérale élevée (de l'ordre de 75 - 95%) en ces monomères fluorés (JP-A-59-147 011, 59-147 010, 59-122 512, 59-124 915, 59-098 116 et 59-07 411). Les applications de ces polymères visent le gainage des fibres optiques, et les films obtenus par fusion des particules possèdent une bonne résistance à l'eau et à l'huile. Dans ces documents-brevets, les polymères obtenus ne peuvent pas être utilisés pour réaliser des revêtements hydrophobes, tels que peintures et apprêts pour textiles et cuirs, en raison de leur température de transition vitreuse très élevée.

La polymérisation du méthacrylate de 2,2,2-trifluoroéthyle pour donner des particules structurées a aussi été développée pour obtenir des dispersions stables en milieu salin, utilisables comme supports de substances physiologiquement actives (JP-A-63-228 069, 01 040 510, 01 144 403 et 01 170 854). Le rôle du méthacrylate de 2,2,2-trifluoroéthyle comme monomère hydrophobe est de limiter la polymérisation dans l'eau de l'acide (méth)acrylique et de favoriser son incorporation en écorce des particules. Dans ce cas, les polymères ne peuvent pas être utilisés dans les revêtements en raison de leur température de transition vitreuse trop élevée.

La synthèse de particules structurées contenant du méthacrylate de 2,2,2-trifluoroéthyle ou du méthacrylate de 2,2,3,3-tétrafluoropropyle associé à du méthacrylate de tertiobutyle en écorce et un coeur de type méthacrylate de méthyle-acrylate de butyle-acide acrylique neutralisé a été décrite pour entrer dans la composition d'un vernis à ongles (JP-05 148 122).

La synthèse de particules structurées fluorées a aussi été décrite pour obtenir des poudres fluorées organosolubles (EP-393 480). Dans ce cas, le coeur des particules est constitué par du polytétrafluoroéthylène et l'écorce, par un polyacrylate fluoré.

On remarque donc que dans les documents-brevets traitant de la polymérisation en émulsion du méthacrylate de

2,2,2-trifluoroéthyle, peu de travaux ont été consacrés à l'élaboration de dispersions procurant des revêtements hydrophobes par coalescence des particules.

On sait par ailleurs que les mélanges de latex constituent une technique pour améliorer les propriétés d'un latex. Ainsi on peut réaliser un latex possédant un niveau de propriété intéressant et l'utiliser comme mélange-maître pour additiver un latex ne possédant pas la propriété désirée. Le niveau de propriété obtenu est généralement intermédiaire entre ceux des deux latex et dépend des proportions relatives de chacun des deux.

Dans le domaine des adhésifs, il est connu que le pouvoir collant (propriété de "tack") est principalement apporté par des polymères de masse relativement faible, tandis que la propriété de cohésion du film adhésif est améliorée par des polymères de plus forte masse. L'utilisation de mélanges de latex possédant ces caractéristiques constitue ainsi un moyen intéressant d'obtenir la polydispersité de masse voulue et généralement plus aisé que par une polymérisation directe.

Les mélanges de latex peuvent être aussi utilisés dans le but d'assurer une réticulation du film au moment de la coalescence et de l'interpénétration des particules. Dans ce cas, on synthétise de manière séparée deux latex qui portent des fonctionnalités chimiquement antagonistes. Ces latex sont ensuite mélangés sans conduire à une réaction entre particules et permettent des temps de stockage convenables. En revanche, lors de la phase d'interpénétration des particules, la réaction chimique a lieu et permet de renforcer la cohésion et les propriétés mécaniques du film. Ces systèmes bicomposants obtenus par mélange de latex sont décrits par exemple dans les brevets européens EP-195 661 et EP-176 609.

Le faible nombre d'atomes de fluor porté par le méthacrylate de 2,2,2-trifluoroéthyle nécessite une forte incorporation de ce monomère dans une formulation polymérique pour obtenir des performances hydrophobes satisfaisantes. On peut ainsi constater que les quantités de ce monomère fluoré relativement coûteux, qui sont nécessaires pour apporter une performance hydrophobe dans les applications décrites (enrobage de fibres optiques, etc.) sont relativement élevées ; de telles quantités sont supérieures à celles permises pour des raisons économiques pour les applications visées dans la présente invention, lesquelles concernent des produits destinés à être largement diffusés (peintures, vernis, etc.).

Pour ces raisons, l'élaboration de latex fluorés, destinés à être utilisés pour la synthèse de dispersions donnant des revêtements hydrophobes par coalescence, dans lesquels les monomères fluorés du type précité entreraient en quantités optimisées, constituerait donc une amélioration importante des connaissances dans ce domaine et contribuerait à favoriser l'utilisation de ces monomères fluorés pour les domaines d'application visés.

La Société déposante a donc cherché à mettre au point des latex (méth)acryliques fluorés filmogènes, donnant des revêtements hydrophobes par coalescence dans des conditions voisines de la température ambiante et sans nécessiter des quantités d'agents de coalescence (tels que l'alcool benzylique, le butyldiglycol, etc.) trop importantes, ces nouveaux latex ayant une teneur en monomère fluoré diminuée de manière très importante, et conservant néanmoins des performances intéressantes dans le domaine de l'hydrophobie, à savoir une diminution de la mouillabilité du film par l'eau et une augmentation de la résistance à l'abrasion humide.

Cet objectif a été atteint de manière surprenante par des latex fluorés à particules structurées possédant une écorce de faible épaisseur, riche en monomère fluoré, ainsi que par des mélanges de latex fluorés avec des latex non fluorés, ces latex fluorés étant avantageusement ceux à particules structurées ci-dessus. Dans le cas des mélanges de latex fluorés et de latex non fluorés de la présente invention, il est encore plus surprenant que les performances obtenues soient supérieures ou égales aux performances du latex fluoré de départ et non pas intermédiaires entre celles de ce dernier et celles du latex non fluoré. La conservation des bonnes propriétés d'hydrophobie des films correspond, selon l'analyse effectuée, à une auto-stratification du film polymère, le latex fluoré, de plus faible tension superficielle que le latex non fluoré, migrant à l'interface air/polymère pour minimiser l'énergie du système.

La présente invention a donc d'abord pour objet un latex (méth)acrylique fluoré consistant en une dispersion de particules ou en un mélange de dispersions de particules, ces dispersions étant obtenues par polymérisation en émulsion en milieu aqueux en au moins un stade, un ou plusieurs monomère(s) perfluoré(s) de la formule (I) telle que définie ci-dessus ayant utilisé(s) comme seul(s) comomère(s) fluoré(s) pour la formation des particules, et étant réparti (s) statistiquement dans des particules formées en un stade ou réparti(s) statistiquement dans l'écorce de particules structurées de type coeur-écorce ou coeur-couche(s) intermédiaire(s)-écorce résultant d'une polymérisation respectivement à deux stades et à plus de deux stades, ledit latex étant constitué par une diposition desdites particules structurées ($F_{struct.}$) ou par un mélange d'au moins une dispersion de particules statistiques non fluorées ($NF_{stat.}$) et d'au moins une dispersion desdites particules structurées flouorées ($F_{struct.}$) et/ou d'au moins une dispersion desdites particules statistiques fluorées ($F_{stat}$ ), le ou les monomères de dormule (I) représentant moins de 80% en poids de l'écorce des particules structurées fluorées, la proportion de monomères de formule (I) par rapport à l'nesemble utilisés pour former la totalité des particules dudit latex étant comprise entre 1,8 et 20% en poids,
la nature et la proportion des monomères entrant dans la composition des particules statistiques, fluorées ou non, ainsi que des différents stades des particlues structurées, étant choisies de telle sorte que la température de transition vitreuse des polymères composant lesdites particules statistiques ou lesdits stades des particules structurées soit

inférieures ou égales à 40°C.

On peut comparer ces valeurs avec la fourchette de 35 à 70% qui serait celle de particules statistiques fluorées conduisant au moins aux mêmes propriétés hydrophobes, déterminées par mesure d'angles de contact ou par mesure de la résistance à l'abrasion humide (cf comparaison entre les Tableaux 1 et 2 ci-après).

De préférence, le monomère (I) est le (méth)acrylate de 2,2,2-trifluoroéthyle.

La nature et la proportion des monomères entrant dans la composition des particules statistiques, fluorées ou non, ainsi que des différents stades des particules structurées, sont choisies de telle sorte que la température de transition vitreuse des polymères composant lesdites particules statistiques ou lesdits stades des particules structurées soit inférieure ou égale à 40°C, étant notamment comprise entre -5 et 25°C. On conserve ainsi de bonnes caractéristiques filmogènes sans nécessiter des températures d'application et des quantités d'agent de coalescence trop importantes.

Conformément à un mode de réalisation particulièrement préféré de la présente invention, la composition en monomères de particules statistiques fluorées ou de l'écorce de particules structurées fluorées est la suivante, en poids, pour un total de 100% en poids :

- 20-80%, notamment 35-70%, d'au moins un monomère (I) ;
- 20-80%, de préférence 20-55%, d'au moins un monomère (méth)acrylique ou vinylique capable de conduire à un homopolymère ayant une basse température de transition vitreuse ;
- 0-30%, de préférence 0-15%, d'au moins un monomère (méth)acrylique, styrénique ou vinylique capable de conduire à un homopolymère ayant une température de transition vitreuse élevée ;
- 0-10%, de préférence 0-2%, d'au moins un monomère (méth)acrylique carboxylique ;
- 0-3%, de préférence 0-2%, d'au moins un monomère (méth)acrylique réticulant ; et
- 0-5%, de préférence 0-2%, d'au moins un monomère (méth)acrylique hydrophile.

Dans ce qui précède, par "basse température de transition vitreuse", on entend une température généralement comprise entre -80 et -20°C ; et par "température de transition vitreuse élevée", on entend une température généralement comprise entre +10 et 200°C.

Un monomère (méth)acrylique capable de conduire à un homopolymère ayant une basse température de transition vitreuse est avantageusement choisi parmi les (méth)acrylates d'alkyle, tels que l'acrylate d'éthyle, l'acrylate de butyle, l'acrylate de 2-éthyl hexyle et l'acrylate de nonyle. Un monomère vinylique de ce type est notamment le vinyl 2-éthyl hexanoate.

Un monomère (méth)acrylique capable de conduire à un homopolymère ayant une température de transition vitreuse élevée est notamment le méthacrylate de méthyle. Un monomère vinylique de ce type est notamment l'acétate de vinyle. Un monomère styrénique de ce type est notamment le styrène.

Parmi les monomères (méth)acryliques carboxyliques, on peut citer en particulier l'acide acrylique et l'acide méthacrylique.

Les monomères réticulants sont notamment choisis parmi les réticulants hydrophiles comme le N-méthylol (méth) acrylamide et l'isobutoxyméthyl acrylamide, et les réticulants hydrophobes comme l'éthylène glycol di(méth)acrylate, le butanediol di(méth)acrylate, l'hexanediol di(méth)acrylate et l'anhydride méthacrylique.

Quant aux monomères (méth)acryliques hydrophiles, ils sont notamment choisis parmi le (méth)acrylate d'éthylimidazolidone et l'acrylamide.

En ce qui concerne la composition en monomères de particules statistiques non fluorées et du coeur de particules structurées fluorées, elle est notamment la suivante, en poids, pour un total de 100% en poids :

- au moins 20%, notamment au moins 40%, d'au moins un monomère (méth)acrylique ou vinylique capable de conduire à un homopolymère ayant une basse température de transition vitreuse ;
- 20%, notamment au moins 30%, d'au moins un monomère (méth)acrylique, styrénique ou vinylique capable de conduire à un homopolymère ayant une température de transition vitreuse élevée ;
- 0,5-10%, notamment 0,5-2,5%, d'au moins un monomère (méth)acrylique carboxylique ;
- 0,3-5%, notamment 0,5-3%, d'au moins un monomère (méth)acrylique réticulant ; et, dans le cas du coeur de particules structurées,
- 0-0,3%, notamment 0-0,2% d'au moins un monomère difonctionnel de compatibilisation ou de greffage dans le cas où le monomère réticulant est le N-méthylol-acrylamide.

Comme monomères capables de conduire à des homopolymères à basse Tg, monomères capables de conduire à des homopolymères à Tg élevée, monomères (méth)acryliques carboxyliques et monomères réticulants qui entrent dans la composition précitée, on peut citer les mêmes que ceux indiqués ci-dessus pour la formation des particules statistiques fluorées, et de l'écorce des particules structurées fluorées. Quant aux monomères de compatibilisation ou de greffage, ils sont choisis notamment parmi les maléates de diallyle, le (méth)acrylate d'allyle et le butane diol diméthacrylate, ce dernier étant également un réticulant.

On peut aussi utiliser, comme comonomère d'écorce de particules statistiques ou structurées, un monomère fluoré de formule (I) différent du (méth)acrylate de 2,2,2-trifluoroéthyle, tel qu'un perfluoroalkyl éthyl (méth)acrylate. Cependant l'utilisation de ces monomères grève le prix du polymère, ce qui n'est pas souhaitable en pratique.

Dans le cas des particules fluorées structurées, on préfère que la proportion pondérale de l'écorce représente 3 à 30%, de préférence 5 à 20%, en poids, desdites particules, pour une taille de celles-ci comprise entre 100 et 300 nm. Cette taille de particules est d'ailleurs visée d'une manière générale pour conférer aux films de revêtements hydrophobes résultants des propriétés de brillant suffisant.

La concentration en particules d'un latex selon l'invention est généralement comprise entre 10 et 65%, en particulier entre 40 et 55% en poids, du poids total de la dispersion.

La présente invention a également pour objet un procédé de préparation d'un latex tel que défini ci-dessus, caractérisé par le fait qu'on prépare au moins une dispersion aqueuse de particules (méth)acryliques fluorées de structure coeur-écorce ou coeur-couche(s) intermédiaire(s)-écorce, le ou les monomères (I) entrant dans la constitution de l'écorce desdites particules, qu'on mélange le cas échéant les dispersions obtenues entre elles, et qu'on mélange le cas échéant la ou les dispersions obtenues avec au moins une dispersion aqueuse de particules (méth)acryliques statistiques non fluorées, ou bien qu'on prépare au moins une dispersion aqueuse de particules (méth)acryliques statistiques fluorées en utilisant, comme comonomère, un ou des composés de formule (I), qu'on mélange le cas échéant les dispersions obtenues entre elles et qu'on mélange la ou les dispersions résultantes avec au moins une dispersion aqueuse de particules (méth)acryliques statistiques non fluorées, toutes les dispersions aqueuses précitées étant effectuées par polymérisation en émulsion en milieu aqueux à un ou plusieurs stades selon le cas.

La préparation des dispersions de particules à structure coeur-écorce ou coeur-couche(s) intermédiaire(s)-écorce peut être effectuée par les méthodes connues suivantes :

(a) polymérisation d'un mélange de monomères riche en monomère(s) (I) sur une semence ne contenant pas de monomère(s) (I), en présence d'un système émulsifiant ne conduisant pas à la formation de nouvelles particules ;
(b) polymérisation successive de deux mélanges de monomères, le premier ne contenant pas de monomère(s) (I) et le second en contenant, avec la possibilité d'introduire séquentiellement les deux mélanges selon un procédé de type "shot", ou d'introduire le second mélange lentement dans la première préémulsion de façon à établir un gradient de composition faisant la compatibilité entre le coeur et l'écorce.

Selon les techniques décrites dans la littérature, on peut améliorer le greffage de l'écorce sur le coeur en utilisant un monomère de greffage ou de compatibilisation, introduit de façon préférée en fin de polymérisation du coeur, par exemple après 75-80% de conversion du coeur.

Il est préférable d'augmenter la masse du coeur des particules en utilisant, par exemple, des monomères réticulants, tels que ceux indiqués ci-dessus. Cependant, la réticulation du coeur ne doit pas être trop importante pour éviter tout problème lors de la coalescence des particules. Ceci est parfaitement réalisé par l'utilisation des N-méthylol(méth) acrylamides. L'augmentation de la masse du coeur des particules structurées fluorées permet d'empêcher toute réorganisation de la morphologie des particules et de conserver le polymère fluoré au niveau de l'écorce. En effet, en raison de la plus forte hydrophobie du ou des monomères (I), le polymère contenant ce ou ces monomères aurait tendance à migrer à l'intérieur des particules.

De même, pour faciliter l'enrobage du coeur par le polymère fluoré d'écorce, il est préférable de ne pas avoir une masse trop élevée pour l'écorce et d'ajouter une quantité adéquate d'un agent de transfert, tel qu'un alkyl mercaptan (dodécylmercaptan, terdodécylmercaptan) ou l'acide thioglycolique, au moment de la polymérisation de l'écorce. La quantité d'agent de transfert ne doit cependant pas être trop élevée pour ne pas nuire aux propriétés mécaniques finales du film polymère. On peut ainsi utiliser jusqu'à 0,5% en poids, notamment jusqu'à 0,3% en poids d'agent de transfert par rapport aux monomères introduits dans l'écorce.

Une quantité d'agent réticulant peut également être introduite au niveau de l'écorce avec une quantité adaptée d'agent de transfert.

Bien que l'introduction d'un monomère (I) dans le coeur des particules de type coeur-écorce ne pose pas de difficultés, il est préférable selon l'invention de ne pas incorporer ce monomère (I) dans le coeur des particules, afin de ne pas augmenter le coût du latex. De plus, une telle incorporation de monomère (I) dans le coeur n'apporte pas d'amélioration notable des performances hydrophobes.

Le système d'amorçage utilisé pour la synthèse des particules structurées peut être un système Red-Ox tel que $K_2S_2O_8$, $(NH_4)_2S_2O_8$ / $Na_2S_2O_5$, $Na_2\ SO_3$ , un système thermique tel que $(NH_4)_2S_2O_8$, un azoïque hydrosoluble tel que le 2,2'-azobis(2-amidinopropane)dihydrochloride (V.50 (WACO)). Les systèmes préférés sont les systèmes Red-Ox $(NH_4)_2S_2O_8$ / $Na_2S_2O_5$ et le $(NH_4)_2S_2O_8$ seul. Les quantités utilisées sont comprises entre 0,2 et 0,5% en poids, de préférence 0,25 à 0,35% en poids, par rapport aux monomères.

Les systèmes émulsifiants utilisés pour la préparation des particules sont choisis dans la gamme des émulsifiants

possédant une balance hydrophile / lipophile adaptée. Les systèmes préférés sont constitués par une association d'un tensio-actif anionique, tel que les nonylphénol sulfates à 20-25 moles d'oxyde d'éthylène, le benzène dodécylsulfonate et les alcools gras éthoxylés sulfates, avec un tensio-actif non ionique tel que les nonylphénols éthoxylés à 10-40 moles d'oxyde d'éthylène et les alcools gras éthoxylés. Le système préféré est l'association du nonylphénol sulfate oxyéthyléné à 25 moles d'oxyde d'éthylène et du nonylphénol oxyéthyléné à 25 moles d'oxyde d'éthylène, dans les proportions en poids préférées de 50/50 à 85/25. La quantité totale d'émulsifiants est de 2 à 4% en poids, de préférence 2,5 à 3,5% en poids, par rapport aux monomères.

La préparation des dispersions de particules structurées selon l'invention est effectuée, de préférence, par un procédé de type semi-continu, permettant de limiter les dérives de composition à l'intérieur du coeur et de l'écorce, fonction des rapports de réactivité des différents monomères. Il est cependant possible de réaliser la polymérisation du coeur en batch.

Les latex selon l'invention sont généralement utilisés tels quels ou sous forme de mélanges de latex. En particulier, on peut citer les mélanges d'au moins deux latex, l'un contenant une quantité suffisante de monomère(s) (I) pour abaisser de manière adéquate la tension superficielle du polymère, l'autre ne contenant pas de monomère(s) (I). Bien que cela ne constitue pas un point déterminant de l'invention, il peut être réalisé un mélange de plusieurs latex fluorés (à particules statistiques ou structurées) contenant des teneurs identiques ou différentes en monomère(s) (I) avec un ou plusieurs latex non fluorés. De même, le mélange d'un latex à base de monomère(s) (I), d'un latex fluoré à base d'un autre monomère fluoré que le(s) monomères (I), et d'un latex non fluoré peut également être envisagé.

La taille moyenne des particules des différents latex peut être différente ; il est cependant préférable de mélanger des latex de tailles similaires ou d'utiliser un latex fluoré présentant une taille moyenne inférieure à celle du latex non fluoré.

Le mélange des latex peut être réalisé à une température comprise entre 0 et 80°C, sous pression atmosphérique, l'utilisation d'une pression supérieure à la pression normale n'apportant pas d'améliorations notables du procédé.

L'introduction d'un latex fluoré dans un latex non fluoré conduit à un résultat équivalent à celui obtenu lors de l'introduction du latex non fluoré dans le latex fluoré.

Il est par ailleurs essentiel, lorsque l'on procède au mélange de deux latex, que l'introduction d'un latex dans l'autre ne conduise pas à une coagulation et déstabilisation des dispersions. Pour cela, il est nécessaire que les émulsifiants stabilisant les particules de chaque latex soient compatibles : ces émulsifiants ne doivent pas porter des charges opposées et sont de préférence des agents tensioactifs anioniques et/ou non ioniques de balance hydrophile/lipophile similaire pour les deux latex.

Pour favoriser la stabilité colloïdale du mélange des deux dispersions, il est également possible d'ajouter au mélange une quantité supplémentaire d'émulsifiant ou de colloïde protecteur tel que l'hydroxy méthyl cellulose, bien que les mélanges obtenus soient généralement particulièrement stables.

L'invention porte également sur des compositions destinées à constituer un revêtement hydrophobe, tel qu'une peinture, dans le domaine du bâtiment, un vernis ou apprêt pour cuirs, un apprêt pour textiles, un vernis de protection pour bois, caractérisées par le fait qu'elles comportent au moins un latex tel que défini précédemment.

Les exemples suivants illustrent encore l'invention sans toutefois la limiter. Dans les exemples, les quantités sont exprimées en parties en poids, la quantité totale de monomères dans chaque exemple étant de 100 parties.

- MATRIFE : méthacrylate de 2,2,2-trifluoroéthyle
- MALLYL : méthacrylate d'allyle
- MAM : méthacrylate de méthyle
- AA : acide acrylique
- AMA : acide méthacrylique
- $AE_2H$ . acrylate de 2-éthyl hexyle
- ABU : acrylate de butyle
- NMA : N-méthylol acrylamide
- AE : acrylate d'éthyle
- DDM : dodécylmercaptan
- NP 250E : nonylphénol oxyéthyléné à 25 moles d'oxyde d'éthylène
- NPS 250E : nonylphénol sulfate oxyéthyléné à 25 moles d'oxyde d'éthylène
- ES (%) : extrait sec, mesuré selon la norme ISO 1625 (1977)
- TMF (°C) : température minimale de filmification, mesurée selon la norme ISO 2115 (1976)
- Ø (mm) : diamètre moyen des particules, déterminé à l'aide d'un autosizer Lo-C distribué par la Société "MALVERN Instruments", cet appareillage utilisant le principe de la diffusion de lumière quasi élastique
- Angle de contact eau (°) : angle de contact avec l'eau d'un film ; la filmification est effectuée par dépôt d'une épaisseur déterminée de latex à l'aide d'un applicateur de 250 µm sur une plaque de verre, puis séchage à température ambiante pendant 8 heures et à 40°C pendant 1 nuit ; les angles de contact sont ensuite déterminés à

l'aide d'un goniomètre sur les plaques conditionnées pendant 2 jours dans une salle à 50% d'humidité ; la mesure est effectuée avec de l'eau bidistillée ; la valeur d'angle de contact recherchée est supérieure ou égale à 90°

- Angle de contact naphtalène (°) : angle de contact avec le naphtalène d'un film obtenu comme précédemment ; la méthode utilisée est la même que précédemment, à la différence que la mesure est effectuée avec du naphtalène purifié
- Tension superficielle $\gamma_s$

EXEMPLES

Exemples 1 à 9 (de référence) : Polymérisation statistique du MATRIFE

Exemple 1 (de référence)

Dans un réacteur de 5 1, muni d'une agitation mécanique centrale, d'une arrivée d'azote, d'un réfrigérant à eau et chauffé par l'intermédiaire d'un bain-marie, on introduit un mélange de 49 parties d'eau déminéralisée, 0,05 partie de NP 25OE, 0,25 partie de NPS 25OE et 0,35 partie de métabisulfite de sodium.

Après avoir dégazé le contenu du réacteur à l'azote et l'avoir porté à 67°C, on introduit simultanément une préémulsion de 45 parties d'eau, 50 parties de MAM, 47 parties d'ABU, 1 partie d'AA, 1 partie de NMA, 1 partie de MATRIFE, 0,45 partie de NP 25OE et 2,25 parties de NPS 25OE, et une solution catalytique de 0,35 partie de persulfate d'ammonium dans 6 parties d'eau déminéralisée, sur une durée de 4 h 30.

Pendant les coulées de la préémulsion et de la solution catalytique, la température du bain et la vitesse d'agitation sont maintenues respectivement à 67°C et 200 tours/minute. Les introductions terminées, on maintient la température du bain à 67 ± 1°C pendant 1 h 30.

La dispersion est ensuite refroidie, filtrée et amenée à pH 9 par ajout de $NH_3$ à 20% dans l'eau.

Les caractéristiques obtenues pour cette dispersion sont rapportées dans le Tableau 1 suivant.

Exemples 2 à 9 (de référence)

On reproduit le mode opératoire de l'Exemple 1, en modifiant à chaque fois la composition des monomères engagés dans la polymérisation. Les compositions utilisées et les caractéristiques des dispersions obtenues sont également rapportées dans le Tableau 1, de même que l'angle de contact avec l'eau, en tant que propriété des films obtenus par coalescence des latex.

Tableau 1 - Polymérisation statistique du MATRIFE

| Exemple | 2* | 1 | 3 | 4 | 5 | 6 | 7 | 8 | 9 |
|---|---|---|---|---|---|---|---|---|---|
| Composition des monomères (en parties en poids): | | | | | | | | | |
| MAM | 51 | 50 | 49 | 48 | 46 | 42,2 | 35,5 | 19,4 | 0 |
| ABU | 47 | 47 | 47 | 47 | 47 | 45,8 | 42,5 | 0 | 0 |
| AA | 1 | 1 | 1 | 1 | 1 | 1 | 1 | 1 | 1 |
| NMA | 1 | 1 | 1 | 1 | 1 | 1 | 1 | 1 | 1 |
| $AE_2H$ | 0 | 0 | 0 | 0 | 0 | 0 | 0 | 38,6 | 37 |
| MATRIFE | 0 | 1 | 2 | 3 | 5 | 10 | 20 | 40 | 61 |
| Caractéristiques de la dispersion obtenue : | | | | | | | | | |
| ES (%) | 49,9 | 52,0 | 50,0 | 50,0 | 50,0 | 50,0 | 50,0 | 50,3 | 50,4 |
| TMF (°C) | 16 | 19,5 | 18 | 19 | 17,5 | 17,5 | 17,5 | 10 | 9,5 |
| Ø (nm) | 147 | 161 | 139 | 151 | 161 | 140 | 155 | 216 | 212 |
| Propriété du film obtenu par coalescence du latex : | | | | | | | | | |
| Angle de contact eau (°) | 78,5 | 78,9 | 76,7 | 78,9 | 79,1 | 80,5 | 82,3 | 88,5 | 92,0 |

* L'Exemple 2 est un exemple témoin (sans MATRIFE)

Ces résultats montrent qu'il est nécessaire de fortement augmenter la teneur en MATRIFE pour obtenir des performances hydrophobes intéressantes, à savoir des angles de contact eau ≥ 90°. En effet, en polymérisant le MATRIFE de manière statistique, il faut atteindre une teneur comprise entre 40 et 60% en poids pour que les performances soient convenables.

Exemple 10 : Polymérisation du MATRIFE pour obtenir des particules structurées

Dans un réacteur de 5 1, muni d'une agitation mécanique centrale, d'une arrivée d'azote, d'un réfrigérant à eau ascendant et chauffé par l'intermédiaire d'un bain-marie, on introduit un mélange de 49 parties d'eau déminéralisée, 0,05 partie de NP 25OE, 0,25 partie de NPS 25OE et 0,35 partie de métabisulfite de sodium.

Après avoir dégazé le contenu du réacteur à l'azote et l'avoir porté à 67°C, on introduit simultanément une première préémulsion de 37,8 parties d'eau, 38,6 parties de MAM, 49,7 parties d'ABU, 0,9 partie d'AA, 1 partie de NMA, 0,38 partie de NP 25OE et 1,89 partie de NPS 25OE avec une solution de 0,31 partie de persulfate d'ammonium dans 5,3 parties d'eau, sur une durée de 4 heures.

Ces coulées terminées, on introduit une deuxième préémulsion constituée de 7,2 parties d'eau déminéralisée, 0,1 partie d'AA, 10 parties de MATRIFE, 5,7 parties d'$AE_2H$, 0,07 partie de NP 25OE et 0,36 partie de NPS 25OE, simultanément avec une solution catalytique de 0,04 partie de persulfate d'ammonium dans 0,7 partie d'eau, sur une durée de 30 minutes.

Pendant les coulées, la température du bain et la vitesse d'agitation sont maintenues respectivement à 67°C et 200 tours/minute. Les introductions terminées, on maintient la température du bain à 67 ± 1°C pendant 1 h 30. La dispersion est ensuite refroidie, filtrée et amenée à pH = 9 par ajout de $NH_3$ à 20% dans l'eau.

Les caractéristiques obtenues pour cette dispersion et pour le film sont rapportées dans le Tableau 2 suivant.

Exemple 11

On reproduit le mode opératoire de l'Exemple 10, en ajoutant 0,2 partie de MALLYL dans le dernier tiers de l'introduction de la première préémulsion.

Les caractéristiques obtenues pour cette dispersion et pour le film sont également rapportées dans le Tableau 2 suivant.

Exemples 12 à 16 :

On reproduit le mode opératoire de l'Exemple 10 en modifiant les compositions des préémulsions, comme indiqué aussi dans le Tableau 2, avec les caractéristiques des dispersions ainsi obtenues et l'angle de contact eau en tant que propriété des films obtenus par coalescence des latex.

Tableau 2

| | Exemple | 10 | | 11 | | 12 | | 13 | | 14 | | 15 | | 16 | |
|---|---|---|---|---|---|---|---|---|---|---|---|---|---|---|---|
| | | parties | %* | parties | %* | parties | %* | parties | %* | parties | %* | parties | %* | parties | %* |
| Composition de la première préémulsion (coeur) | Total monomères | 90,2 | | 90,4 | | 96,2 | | 92,6 | | 88,0 | | 84,3 | | 84,3 | |
| | Eau | 37,8 | | 37,8 | | 43,2 | | 41,7 | | 39,7 | | 37,9 | | 37,9 | |
| | MAM | 38,6 | 42,8 | 38,6 | 42,7 | 44,2 | 46,0 | 47 | 50,6 | 40,3 | 45,8 | 38,7 | 45,9 | 38,7 | 45,9 |
| | ABU | 49,7 | 55,1 | 49,7 | 55,0 | 50,0 | 52,0 | 43,7 | 47,1 | 45,6 | 51,8 | 43,7 | 51,8 | 43,7 | 51,8 |
| | AA | 0,9 | 1,0 | 0,9 | 1,0 | 0,95 | 1,0 | 0,93 | 1,0 | 0,94 | 1,0 | 0,84 | 1,0 | 0,84 | 1,0 |
| | NMA | 1 | 1,1 | 1 | 1,1 | 1 | 1,0 | 1 | 1,1 | 1 | 1,1 | 1 | 1,2 | 1 | 1,2 |
| | NP 25OE | 0,38 | | 0,38 | | 0,43 | | 0,42 | | 0,40 | | 0,38 | | 0,38 | |
| | NPS 25OE | 1,89 | | 1,89 | | 2,16 | | 2,08 | | 1,98 | | 1,89 | | 1,89 | |
| | MALLYL [a,b] | 0 | | 0,2[a] | | 0 | | 0 | | 0,2[a] | 0,2 | 0,1[b] | 0,1 | 0,1[a] | 0,1 |
| Composition de la seconde préémulsion (écorce) | Total monomères | 15,8 | | 15,8 | | 4 | | 7,37 | | 11,86 | | 15,86 | | 15,86 | |
| | Eau | 7,2 | | 7,2 | | 1,8 | | 3,3 | | 5,3 | | 7,1 | | 7,1 | |
| | MAM | 0 | | 0 | | 0 | | 0 | | 0 | | 0 | | 0 | |
| | AA | 0,1 | 0,6 | 0,1 | 0,6 | 0,05 | 1,2 | 0,07 | 1,0 | 0,06 | 0,5 | 0,16 | 1,0 | 0,16 | 1,0 |
| | NMA | 0 | | 0 | | 0 | | 0 | | 0 | | 0 | | 0 | |
| | MATRIFE | 10 | 63,3 | 10 | 63,3 | 2,5 | 62,5 | 5 | 67,8 | 7,5 | 63,2 | 10 | 63,1 | 10 | 63,1 |
| | $AE_2H$ | 5,7 | 36,1 | 5,7 | 36,1 | 1,45 | 36,3 | 2,3 | 31,2 | 4,3 | 36,2 | 5,7 | 35,9 | 5,7 | 35,9 |
| | NP 25 OE | 0,07 | | 0,07 | | 0,02 | | 0,03 | | 0,05 | | 0,07 | | 0,07 | |
| | NPS 25 OE | 0,36 | | 0,36 | | 0,09 | | 0,17 | | 0,27 | | 0,36 | | 0,36 | |
| Caractéristiques de la dispersion | ES (%) | 50,8 | | 50,4 | | 51,3 | | 50,0 | | 50,0 | | 49,5 | | 51,6 | |
| | ⌀ (nm) | 199 | | 177 | | 154 | | 154 | | 174 | | 174 | | 161 | |
| | TMF (°C) | 10 | | 11,5 | | 10 | | 13,5 | | 10 | | 11 | | 10 | |
| Propriété du film obtenu par coalescence du latex | Angle de contact eau (°) | 92 | | 93 | | 94 | | 90,4 | | 93 | | 97,2 | | 94,2 | |

a. MALLYL introduit dans le dernier tiers de coulée de la 1ère préémulsion
b. MALLYL introduit dans le dernier quart de coulée de la 1ère préémulsion.
* ces pourcentages sont obtenus par rapport à la somme des monomères (selon le cas pour la première ou pour la deuxième préémulsion)

Les résultats des mesures des angles de contact rapportés dans le Tableau 2 prouvent l'intérêt d'utiliser la synthèse de particules structurées possédant une écorce riche en MATRIFE (60-65%) pour obtenir un film possédant des propriétés hydrophobes.

Les résultats obtenus pour une teneur globale en MATRIFE comprise entre 2,5 et 10% en poids (Exemples 10 à 16) sont sensiblement meilleurs que ceux obtenus pour une polymérisation statistique du MATRIFE à raison de 61% en poids (Exemple 9).

<u>Exemples 17 à 21 d'application :</u> <u>Préparation d'une peinture à partir d'une dispersion contenant du MATRIFE</u>

On prépare une peinture pour façades ayant la formulation suivante :

| | Composants | Parties en poids | Parties en volume |
|---|---|---|---|
| Premier groupe | Eau déminéralisée | 78,0 | 106,7 |
| | Dispersion à tester à 50,2% d'extrait sec en poids | 481,6 | 658,6 |
| | Epaississant non associatif commercialisé par la Société COATEX sous la dénomination "VISCOATEX 46" (32% en poids) | 4,7 | 6,4 |
| Deuxième groupe | Bactéricide commercialisé par la Société "RIEDEL DE HAËN" sous la dénomination "MERGAL K6N" (100%) | 2,0 | 2,7 |
| | Fongicide commercialisé par les Laboratoires PHAGOGENE sous la dénomination "PARMETOL DF19" (100%) | 2,0 | 2,7 |
| | Agent mouillant commercialisé par la Société "BK - Ladenburg" sous la dénomination "CALGON N" (100%) | 0,6 | 0,8 |
| | Dispersant commercialisé par la Société "COATEX" sous la dénomination "COATEX P/90" (40% en poids) | 3,0 | 4,1 |
| | Antimousse commercialisé par la Société "HENKEL - NOPCO" sous la dénomination "DEHYDRAN 1620" (100%) | 1,1 | 1,5 |
| | $NH_3$ (22%) | 1,2 | 1,6 |
| | $TiO_2$ commercialisé par la Société "TIOXIDE" sous la dénomination "TR92" | 140,7 | 48,1 |
| | Carbonate de calcium (charge) commercialisé par la Société "OMYA" sous la dénomination "DURCAL 2" | 64,7 | 32,8 |
| | Carbonate de calcium (charge) commercialisé par la Société "OMYA" sous la dénomination "DURCAL 10" | 141,9 | 71,9 |
| | Mica (charge) commercialisé par la Société "KAOLIN D'ARVOR" sous la dénomination "MICARVOR 20" | 51,6 | 25,2 |
| Troisième groupe | Propylène glycol (cosolvant). | 15,2 | 20,8 |
| | Coalescent commercialisé par la Société "EASTMAN KODAK" sous la dénomination "TEXANOL" | 9,6 | 13,1 |
| | Antimousse commercialisé par la Société "HENKEL NOPCO" sous la dénomination "DEHYDRAN 1620" (100%) | 1,1 | 1,5 |
| | Epaississant associatif commercialisé par la Société "SERVO DELDEN" sous la dénomination "SER AD FX 1010" (50% en poids) | 1,0 | 1,4 |
| | | 1000,0 | 1000,0 |

On disperse, pendant 5 minutes, à vitesse lente, les composants du premier groupe, puis on introduit sous agitation

et progressivement les composants du deuxième groupe. On disperse pendant 20 minutes, à vitesse élevée et sous refroidissement. Enfin, on introduit sous agitation et progressivement les composants du troisième groupe.

On a ainsi préparé des peintures à partir des dispersions obtenues dans les Exemples 14, 11, 10, 2 et 8.

Les caractéristiques obtenues pour les films de peinture sont décrites dans le Tableau n° 3.

Tableau n°3

| Exemple d'Application | Dispersion de l'Exemple | Angle de contact (°) | Angle de contact naphtalène (°) | Perméabilité à la vapeur d'eau ($g/m^2$/24h) |
|---|---|---|---|---|
| 17 | 14 | 96,0 | 45,7 | 169 |
| 18 | 11 | 97,5 | 43,0 | 166 |
| 19 | 10 | 93,8 | 36,7 | 169 |
| 20 | 2 | 80,3 | 23,8 | 183 |
| 21 | 8 | 90,6 | 40,6 | 116 |

Les peintures formulées d'après les Exemples 17, 18 et 19, contenant des dispersions de particules structurées à teneur en MATRIFE, conduisent à des films qui présentent une plus grande hydrophobie et oléophobie que les films obtenus, d'une part d'après l'Exemple 20, contenant la dispersion témoin de l'Exemple 2 (sans MATRIFE), et d'autre part d'après l'Exemple 21, contenant la dispersion de l'Exemple 8, à 40% de MATRIFE incorporé statistiquement. Par ailleurs, les perméabilités à la vapeur d'eau des films sont moins abaissées lorsque l'on utilise des dispersions de particules à structure coeur - écorce. Ces résultats confirment ceux précédemment obtenus sur les dispersions non formulées.

Exemples 22 à 29 : Préparation de dispersions destinées à être formulées dans des apprêts pour cuir et textiles

Exemple 22 :

Dans un réacteur de 5 1, muni d'une agitation magnétique centrale, d'une arrivée d'azote et surmonté par un réfrigérant ascendant, on introduit un mélange de 75 parties d'eau déminéralisée, 0,3 partie de NPS 25OE et 0,3 partie de métabisulfite de sodium.

Le contenu du réacteur est ensuite dégazé à l'azote, puis chauffé à 55°C. Une fois cette température atteinte, on introduit 10% de la première préémulsion contenant 62,1 parties d'eau déminéralisée, 49,9 parties d'AE, 30,6 parties de MAM, 7,7 parties d'AA, 1,8 partie de NMA et 2,43 parties de NPS 25OE, ainsi que 10% de la solution catalytique constituée par 0,3 partie de persulfate d'ammonium dans 6 parties d'eau, en 15 minutes, tout en maintenant la température à 55°C.

On maintient ensuite la température du bain à 55°C pendant 15 minutes, puis on reprend les coulées de la première préémulsion et de la solution catalytique en 2 h 15.

La coulée de la première préémulsion terminée, on ajoute la deuxième préémulsion contenant 6,9 parties d'eau déminéralisée, 5,32 parties d'AE, 3,63 parties de MATRIFE, 0,85 partie d'AA, 0,2 partie de NMA, 0,03 partie de DDM et 0,27 partie de NPS 25OE, tout en continuant à introduire le reste de la solution catalytique et en maintenant la température à 55°C.

Les coulées terminées, le mélange réactionnel est chauffé pendant 1 h à 80°C, puis refroidi à la température ambiante et filtré sur un filtre de 30 µm.

Les caractéristiques obtenues pour cette dispersion sont rapportées dans le Tableau 4.

Exemples 23 à 29

On reproduit le mode opératoire de l'Exemple 22, en modifiant à chaque fois la composition des préémulsions. Ces compositions ainsi que les caractéristiques des dispersions obtenues sont rapportées dans le Tableau 4 suivant, avec les propriétés des films obtenus par coalescence des latex (angles de contact).

## Tableau 4

| | 22 | | 23* | | 24 | | 25 | | 26 | | 27 | | 28 | | 29** | |
|---|---|---|---|---|---|---|---|---|---|---|---|---|---|---|---|---|
| | parties | %*** | parties | %*** | parties | %*** | parties | %*** | parties | %*** | parties | %*** | parties | %*** | parties | %*** |
| 1ère préémulsion Total monomères | 90 | | 100 | | 80,2 | | 80,2 | | 95,0 | | 90,2 | | 90,1 | | 100 | |
| Eau | 62,1 | | 69 | | 55,2 | | 55,2 | | 65,5 | | 62,1 | | 62,1 | | 69 | |
| MAM | 30,6 | 34,0 | 31 | 31 | 27,4 | 34,2 | 27,4 | 34,2 | 32,3 | 34,0 | 30,6 | 33,9 | 36,4 | 40,3 | 0 | 0 |
| AE | 49,9 | 55,4 | 58,4 | 58,4 | 44,4 | 55,4 | 44,4 | 55,4 | 52,7 | 55,5 | 49,9 | 55,3 | 49,9 | 55,3 | 50,5 | 50,5 |
| AA | 7,7 | 8,5 | 8,5 | 8,5 | 6,8 | 8,5 | 6,8 | 8,5 | 8,1 | 8,5 | 7,7 | 8,5 | 1,8 | 2,0 | 8,5 | 8,5 |
| MMA | 1,8 | 2,0 | 2 | 2 | 1,6 | 2,0 | 1,6 | 2,0 | 1,9 | 2,0 | 1,8 | 2,0 | 1,8 | 2,0 | 2 | 2,0 |
| MPS 250E | 2,43 | | 2,70 | | 2,16 | | 2,16 | | 2,27 | | 2,43 | | 2,43 | | 2,70 | |
| MALLYL | 0 | 0 | 0 | 0 | 0 | 0 | 0 | 0 | 0 | 0 | 0,2 | 0,2 | 0,2 | 0,2 | 0 | 0 |
| MATRIFE | 0 | 0 | 0 | 0 | 0 | 0 | 0 | 0 | 0 | 0 | 0 | 0 | 0 | 0 | 39 | 39 |
| 2ème préémulsion Total monomères | | | | | | | | | | | | | | | | |
| Eau | 6,9 | | - | | 13,8 | | 13,8 | | 3,45 | | 6,9 | | 6,9 | | - | |
| MAM | | 0 | - | - | 0 | 0 | 0 | | 0 | 0 | 0 | 0 | 0 | 0 | - | - |
| AE | 5,32 | 53,2 | - | - | 10,64 | 53,2 | 10,64 | 53,2 | 0,11 | 2,2 | 1,75 | 17,5 | 1,75 | 17,5 | - | - |
| AA | 0,85 | 8,5 | - | - | 1,7 | 8,5 | 0,4 | 2,0 | 0,43 | 8,6 | 0,2 | 2,0 | 0,2 | 2,0 | - | - |
| MMA | 0,2 | 2,0 | - | - | 0,4 | 2,0 | 0,4 | 2,0 | 0,1 | 2,0 | 0,2 | 2,0 | 0,2 | 2,0 | - | - |
| MATRIFE | 3,63 | 36,3 | - | - | 7,26 | 36,3 | 8,56 | 42,8 | 3 | 60,0 | 6 | 60,0 | 6 | 60,0 | - | - |
| AE2H | | 0 | - | - | 0 | 0 | 0 | 0 | 1,36 | 27,2 | 1,85 | 18,5 | 1,85 | 18,5 | - | - |
| MPS 250E | 0,27 | | - | | 0,54 | | 0,54 | | 0,13 | | 0,27 | | 0,27 | | - | |
| DDM | 0,03 | | - | | 0,06 | | 0,06 | | 0,02 | | 0,035 | | 0,035 | | - | |
| % MATRIFE dans l'écorce | 36,3 | | - | | 36,3 | | 42,8 | | 60 | | 60 | | 60 | | - | |
| % en poids de l'écorce | 10 | | - | | 20 | | 20 | | 5 | | 10 | | 10 | | - | |
| ES (%) | 42 | | 43,5 | | 40,7 | | 40,2 | | 41,2 | | 40,4 | | 39,4 | | 40,5 | |
| TMF (°C) | 9 | | 5 | | 2 | | 9 | | 9 | | 18 | | 18 | | 9,5 | |
| ø (nm) | 162 | | 162 | | 174 | | 166 | | 151 | | 158 | | 159 | | 208 | |
| angle de contact eau à 20°C (° ) | 74 | | 63,6 | | 77,3 | | 86,6 | | 66,4 | | 69,2 | | 70,0 | | 78,8 | |
| angle de contact eau à 160°C (° ) | | | 73,6 | | 86,3 | | 87 | | 93,5 | | 88,6 | | 88,7 | | 80,6 | |

* L'Exemple 23 est un exemple témoin de polymérisation statistique, sans MATRIFE

** L'Exemple 29 est un exemple de référence de polymérisation statistique du MATRIFE

*** Ces pourcentages sont obtenus par rapport à la somme des monomères (selon le cas pour la première ou pour la deuxième préémulsion)

Les Exemples 22 à 29 montrent la forte influence de l'épaisseur et de la composition de l'écorce fluorée sur les propriétés hydrophobes des films. L'incorporation du MATRIFE dans l'écorce de particules structurées coeur-écorce permet d'améliorer nettement les performances hydrophobes du film par rapport au témoin (Exemple 23) et par rapport au latex statistique de l'Exemple 29, contenant 39 parties de MATRIFE.

Exemples 30 à 34 d'application : Préparation d'apprêts pour textiles et cuirs

Les latex des Exemples 23 (témoin), 22, 24, 25 et 29 sont ensuite formulés de la manière suivante (Exemples respectivement 30 à 34) :

- Pigment noir commercialisé sous la dénomination "LEPTON" 20%
- Latex 30%
- Eau 50%

Ces formulations ont été pulvérisées sur cuir et séchées à 60°C. Les cuirs traités sont caractérisés selon une méthode de résistance dynamique à la pénétration de l'eau (Norme ASTM 2099-70 1973) et selon une méthode de détermination de la solidité des teintures ou du revêtement d'un cuir au frottement translatif (NFG 52 301).

Les résultats sont rassemblés dans le Tableau 5 suivant.

Tableau 5

| Exemple | 30 | 31 | 32 | 33 | 34 |
|---|---|---|---|---|---|
| Dispersion de l'Exemple | 23* | 22 | 24 | 25 | 29 |
| % global de MATRIFE | 0 | 3,6 | 7,26 | 8,56 | 39 |
| Structure des particules | Statistique | Coeur-Ecorce | Coeur-Ecorce | Coeur-Ecorce | Statistique |
| Nombre de flexions ASTM 2099-70 | 352 ± 138 | 375 ± 228 | 1078 ± 155 | 947 ± 457 | 1804 ± 441 |
| Résistance aux frottements humides ** | 1 | 3 | 2 | 3,5 | z1 |

* Témoin

** Cotation des résultats : 1 = moins bon;
5 = meilleur.

Les essais effectués montrent une augmentation du nombre de flexions avec l'introduction de MATRIFE et une augmentation de la résistance à l'abrasion humide du film. Ces résultats confirment le rôle joué par le MATRIFE pour augmenter les propriétés hydrophobes des revêtements protecteurs. On remarquera que la résistance aux frottements humides est nettement améliorée par la polymérisation du MATRIFE en écorce des particules.

Exemple 35 (de référence) : Préparation d'un latex sans MATRIFE

Dans un réacteur de 5 l, muni d'une agitation mécanique centrale, d'une arrivée d'azote, d'un réfrigérant à eau et chauffé par l'intermédiaire d'un bain-marie, on introduit un mélange de 49 parties d'eau déminéralisée, 0,05 partie de NP 25OE, 0,25 partie de NPS 25OE et 0,35 partie de métabisulfite de sodium. Après avoir dégazé le contenu du réacteur à l'azote et l'avoir porté à 67°C, on introduit simultanément une préémulsion de 45 parties d'eau, 51 parties de MAM, 47 parties d'ABU, 1 partie d'AA, 1 partie de NMA, 0,45 partie de NP 25OE et 2,25 parties de NPS 25OE, et une solution catalytique de 0,35 partie de persulfate d'ammonium dans 6 parties d'eau déminéralisée, en l'espace de 4 h 30.

Pendant les coulées de préémulsion et de solution catalytique, la température du bain et la vitesse d'agitation sont maintenues respectivement à 67°C et 200 tours/minute. Les introductions terminées, on maintient la température du bain à 67 ± 1°C pendant 1 h 30. La dispersion est ensuite refroidie, filtrée et amenée à pH = 9 par ajout de $NH_3$ à 20% dans l'eau.

Les caractéristiques obtenues pour cette dispersion et les propriétés des films obtenus par coalescence des latex sont indiquées dans le Tableau 6.

Exemples 36 et 37 (de référence)

On reproduit le mode opératoire de l'Exemple 35 en modifiant à chaque fois la composition des monomères engagés dans la polymérisation.

Les caractéristiques des dispersions obtenues et les propriétés des films obtenus par coalescence des latex sont également rapportées dans le Tableau 6.

Tableau 6

| | Exemple | 35 | 36 | 37 |
|---|---|---|---|---|
| Composition des monomères engagés | MAM | 51 | 19,4 | 0 |
| | ABU | 47 | 0 | 0 |
| | AA | 1 | 1 | 1 |
| | NMA | 1 | 1 | 1 |
| | $AE_2H$ | 0 | 38,6 | 37 |
| | MATRIFE | 0 | 40 | 61 |
| Caractéristiques des dispersions obtenues | ES % | 52,0 | 50,3 | 50,4 |
| | TMF % | 19,5 | 10 | 9,5 |
| | ø nm | 161 | 216 | 212 |
| Propriétés des films obtenus par coalescence des latex | Angle contact eau (°) | 72,9 | 88,5 | 92,2 |
| | Tension superficielle (mN/m) $\gamma_s$ | 31,8 | | 27,5 |

Exemples 38 à 42 : Mélanges latex fluoré Exemple 37 - latex non fluoré Exemple 35

On a effectué cinq mélanges de compositions différentes associant le latex fluoré de l'Exemple 37 et le latex non fluoré de l'Exemple 35 (Exemples respectivement 38 à 42).

Dans le Tableau 7, on a rapporté les propriétés des films obtenus par coalescence de ces mélanges de latex, ainsi que des latex fluoré et non fluoré des Exemples respectivement 37 et 35.

Tableau 7

| Exemple | Dispersion de l'Exemple 37 | Dispersion de l'Exemple 35 | % MATRIFE | Angle de contact eau (°) | $\gamma_s$ (mN/m) |
|---|---|---|---|---|---|
| 37 | 100 | 0 | 61 | 92,2 ± 0,4 | 27,5 |
| 38 | 20 | 80 | 12,2 | 89,6 ± 1,5 | 29,0 |
| 39 | 10 | 90 | 6,1 | 92,7 ± 2,0 | 29,6 |
| 40 | 8 | 92 | 4,9 | 91,6 ± 1,8 | 29,8 |
| 41 | 6 | 94 | 3,7 | 89,2 ± 2,4 | 27,4 |
| 42 | 4 | 96 | 2,4 | 90,7 ± 2,2 | 23,9 |
| 35 | 0 | 100 | 0 | 78,5 ± 1,0 | 31,8 |

Les films obtenus par coalescence des mélanges de latex présentent des propriétés hydrophobes comparables à celles obtenues avec le latex fluoré uniquement et montrent donc l'intérêt de cette technique pour minimiser la teneur pondérale en MATRIFE nécessaire pour obtenir un revêtement protecteur possédant des propriétés hydrophobes.

Exemples 43 à 45 : Mélanges latex fluoré Exemple 11 - latex non fluoré Exemple 35

De la même façon que dans les Exemples 38 à 42, on réalise des mélanges de compositions différentes associant le latex fluoré de l'Exemple 11 au latex non fluoré de l'Exemple 35.

Les résultats sont rassemblés dans le Tableau 8.

Tableau 8

| Exemple | % de dispersion de l'Exemple 11 | % de dispersion de l'Exemple 35 | % MATRIFE | Angle de contact eau (°) | $\gamma_s$ (mN/m) |
|---|---|---|---|---|---|
| 11 | 100 | 0 | 10 | 92,6 ± 1,5 | 30,6 |
| 43 | 50 | 50 | 5 | 92,2 ± 0,4 | 24,4 |
| 44 | 30 | 70 | 3 | 91,8 ± 1,0 | 27,5 |
| 45 | 20 | 80 | 2 | 92,7 ± 1,0 | 27,1 |
| 35 | 0 | 100 | 0 | 78,5 ± 1,0 | 31,8 |

Dans ce cas également, on constate une conservation des performances hydrophobes quand on ajoute le latex non fluoré, permettant d'obtenir des caractéristiques intéressantes pour des teneurs massiques en MATRIFE aussi faibles que 2%.

Exemples 46 et 47 : Mélanges de latex fluoré de l'Exemple 10 et de latex non fluoré de l'Exemple 35

Des mélanges de latex sont réalisés pour des proportions différentes du latex fluoré synthétisé à l'Exemple 10 et du latex non fluoré synthétisé à l'Exemple 35. Les résultats sont rassemblés dans le Tableau 9.

Tableau 9

| Exemple | % de dispersion de l'Exemple 10 | % de dispersion de l'Exemple 35 | % MATRIFE | Angle de contact eau (°) | $\gamma_s$ (mN/m) |
|---|---|---|---|---|---|
| 10 | 100 | 0 | 10 | 92,7 ± 1,9 | 29,5 |
| 46 | 50 | 50 | 5 | 97 ± 0,5 | 25,5 |
| 47 | 20 | 80 | 2 | 93 ± 1,0 | 27,3 |
| 35 | 0 | 100 | 0 | 78,5 ± 1,0 | 31,8 |

Dans ces Exemples 46 et 47, on constate également une nette amélioration des performances hydrophobes des latex fluorés.

Exemples 48 et 49 (d'application)

On réalise des mélanges entre du latex non fluoré de l'Exemple 23 et du latex fluoré statistique de l'Exemple 29 (Exemples 48 et 49).

Ces mélanges sont ensuite formulés de la manière suivante :

- Pigment noir commercialisé sous la dénomination "LEPTON" 20%
- Mélange latex (ou latex de référence) 30%
- Eau 50%

Ces formulations sont ensuite pulvérisées sur cuir et séchées à 60°C. Les cuirs traités sont caractérisés selon les méthodes décrites aux Exemples 30 à 34.

Les résultats sont rapportés dans le Tableau 10.

Tableau 10

| Exemple | % de dispersion de l'Exemple 23 | % de dispersion de l'Exemple 29 | % MATRIFE | Nombre de flexions ASTM 2099-70 | Résistance aux frottements humides |
|---|---|---|---|---|---|
| 23 | 100 | 0 | 0 | 352 ± 158 | 1 |
| 48 | 87,5 | 12,5 | 4,88 | 1595 ± 235 | 3 |

Tableau 10 (suite)

| Exemple | % de dispersion de l'Exemple 23 | % de dispersion de l'Exemple 29 | % MATRIFE | Nombre de flexions ASTM 2099-70 | Résistance aux frottements humides |
|---|---|---|---|---|---|
| 49 | 75 | 25 | 3,75 | 2325 ± 533 | 2,5 |
| 29 | 0 | 100 | 39 | 1804 ± 441 | 1 |

Le mélange de latex fluoré avec le latex non fluoré permet d'améliorer à la fois la résistance à l'abrasion et à la flexion humide par rapport au témoin (Exemple 23) et par rapport à un latex contenant une forte quantité de MATRIFE réparti statistiquement (Exemple 29).

Exemples 50 et 51

On réalise des mélanges du latex non fluoré de l'Exemple 23 et du latex fluoré de structure coeur-écorce de l'Exemple 25.

Les caractéristiques des films obtenus par coalescence des latex sont rapportées dans le Tableau 11.

Tableau 11

| Exemple | % de dispersion de l'Exemple 25 | % de dispersion de l'Exemple 23 | % MATRIFE | Angle de contact eau (°) | $\gamma_s$ (mN/m) |
|---|---|---|---|---|---|
| 25 | 100 | 0 | 8,56 | 86,6 | 25,5 |
| 50 | 50 | 50 | 4,28 | 88,8 | 25,4 |
| 51 | 30 | 70 | 2,57 | 86,0 | 27,1 |
| 23 | 0 | 100 | 0 | 63,6 | 35,8 |

Une amélioration des performances hydrophobes des revêtements est également constatée dans le cas du mélange de ces latex.

## Revendications

1. Latex (méth)acrylique fluoré consistant en une dispersion de particules ou en un mélange de dispersions de particules, ces dispersions étant obtenues par polymérisation en émulsion en milieu aqueux en au moins un stade, un ou plusieurs monomère(s) perfluoré(s) de formule (I) :

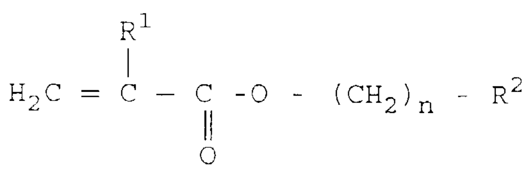

(I)

dans laquelle :

- $R^1$ représente $CH_3$ ou H ;
- $R^2$ représente un radical alkyle perfluoré en $C_1$-$C_{10}$ ; et
- $0 < n \leq 4$,

ayant été utilisé(s) comme seul(s) comonomère(s) fluoré(s) pour la formation des particules, et étant réparti(s) statistiquement dans des particules formées en un stade ou réparti(s) statistiquement dans l'écorce de particules structurées de type coeur-écorce ou coeur-couche(s) intermédiaire(s)-écorce résultant d'une polymérisation respectivement à deux stades et à plus de deux stades, ledit latex étant constitué par une dispersion desdites particules structurées ou par un mélange d'au moins une dispersion desdites particules structurées fluorées et/ou d'au

moins une dispersion desdites particules statistiques fluorées et d'au moins une dispersion de particules statistiques fluorées ($F_{stat.}$), le ou les monomères de formule (I) représentant moins de 80% en poids de l'écorce des particules structurées fluorées, la proportion de monomères de formule (I) par rapport à l'ensemble des monomères utilisés pour former la totalité des particules dudit latex étant comprise entre 1,8 et 20% en poids,
la nature et la proportion des monomères entrant dans la composition des particules statistiques, fluorées ou non, ainsi que des différents stades des particules structurées, étant choisies de telle sorte que la température de transition vitreuse des polymères composant lesdites particules statistiques ou lesdits stades des particules structurées soit inférieure ou égale à 40°C.

**2.** Latex selon la revendication 1, caractérisé par le fait que le monomère (I) est le (méth)acrylate de 2,2,2-trifluoroéthyle.

**3.** Latex selon l'une des revendications 1 et 2, caractérisé par le fait que la proportion de monomères de formule (I) par rapport à l'ensemble des monomères utilisés pour former la totalité des particules dudit latex est comprise entre 2 et 10% en poids.

**4.** Latex selon l'une des revendications 1 à 3, caractérisé par le fait que la nature et la proportion des monomères entrant dans la composition des particules statistiques, fluorées ou non, ainsi que des différents stades des particules structurées, sont choisies de telle sorte que la température de transition vitreuse des polymères composant lesdites particules statistiques ou lesdits stades des particules structurées soit comprise entre -5 et 25°C.

**5.** Latex selon l'une des revendications 1 à 4, caractérisé par le fait que la composition en monomères de particules statistiques fluorées ($F_{stat.}$) ou de l'écorce de particules structurées fluorées ($F_{struct.}$) est la suivante, en poids, pour un total de 100% en poids :

- 20-80%, notamment 35-70%, d'au moins un monomère (I) ;
- 20-80%, notamment 20-55%, d'au moins un monomère (méth)acrylique ou vinylique capable de conduire à un homopolymère ayant une basse température de transition vitreuse généralement comprise entre -80 et -20°C ;
- 0-30%, notamment 0-15%, d'au moins un monomère (méth)acrylique, styrénique ou vinylique capable de conduire à un homopolymère ayant une température de transition vitreuse élevée généralement comprise entre +10 et 200°C ;
- 0-10%, notamment 0-2%, d'au moins un monomère (méth)acrylique carboxylique ;
- 0-3%, notamment 0-2%, d'au moins un monomère (méth)acrylique réticulant ; et
- 0-5%, notamment 0-2%, d'au moins un monomère (méth)acrylique hydrophile.

**6.** Latex selon l'une des revendications 1 à 5, caractérisé par le fait que la composition en monomères de particules statistiques non fluorées ($NF_{stat.}$) et du coeur de particules structurées fluorées ($F_{struct.}$) est la suivante, en poids, pour un total de 100 parties en poids :

- au moins 20%, notamment au moins 40%, d'au moins un monomère (méth)acrylique ou vinylique capable de conduire à un homopolymère ayant une basse température de transition vitreuse généralement comprise entre -80 et -20°C ;
- au moins 20%, notamment au moins 30%, d'au moins un monomère (méth)acrylique, styrénique ou vinylique capable de conduire à un homopolymère ayant une température de transition vitreuse élevée généralement comprise entre +10 et 200°C ;
- 0,5-10%, notamment 0,5-2,5%, d'au moins un monomère (méth)acrylique carboxylique ;
- 0,3-5%, notamment 0,5-3%, d'au moins un monomère (méth)acrylique réticulant ; et, dans le cas du coeur de particules structurées,
- 0-0,3%, notamment 0-0,2%, d'au moins un monomère difonctionnel de compatibilisation ou de greffage, dans le cas où le monomère réticulant est le N-méthylolacrylamide.

**7.** Latex selon l'une des revendications 5 et 6, caractérisé par le fait que le monomère (méth)acrylique capable de conduire à un homopolymère ayant une basse température de transition vitreuse généralement comprise entre -80 et -20°C est choisi parmi les (méth)acrylates d'alkyle donnant des homopolymères ayant une température de transition vitreuse comprise entre -80 et -20°C : l'acrylate d'éthyle, l'acrylate de butyle, l'acrylate de 2-éthyl hexyle et l'acrylate de nonyle.

8. Latex selon l'une des revendications 5 et 6, caractérisé par le fait que le monomère vinylique capable de conduire à un homopolymère ayant une basse température de transition vitreuse généralement comprise entre -80 et -20°C est le vinyl 2-éthyl hexanoate.

9. Latex selon l'une des revendications 5 et 6, caractérisé par le fait que le monomère (méth)acrylique capable de conduire à un homopolymère ayant une température de transition vitreuse élevée généralement comprise entre +10 et 200°C est le méthacrylate de méthyle.

10. Latex selon l'une des revendications 5 et 6, caractérisé par le fait que le monomère vinylique capable de conduire à un homopolymère ayant une température de transition vitreuse élevée généralement comprise entre +10 et 200°C est l'acétate de vinyle.

11. Latex selon l'une des revendications 5 et 6, caractérisé par le fait que le monomère (méth)acrylique carboxylique est l'acide acrylique ou l'acide méthacrylique.

12. Latex selon l'une des revendications 5 et 6, caractérisé par le fait que le monomère réticulant est choisi parmi les réticulants hydrophiles comme le N-méthylol (méth)acrylamide et l'isobutoxyméthylacrylamide, et les réticulants hydrophobes comme l'éthylène glycol di(méth)acrylate, le butanediol di(méth)acrylate, l'hexanediol di(méth) acrylate et l'anhydride méthacrylique.

13. Latex selon la revendication 5, caractérisé par le fait que le monomère (méth)acrylique hydrophile est le (méth) acrylate d'éthylimidazolidone ou l'acrylamide.

14. Latex selon la revendication 6, caractérisé par le fait que le monomère de compatibilisation ou de greffage est choisi parmi les maléates de diallyle, le (méth)acrylate d'allyle et le butane diol diméthacrylate.

15. Latex selon l'une des revendications 1 à 14, caractérisé par le fait que la proportion pondérale de l'écorce des particules fluorées structurées ($F_{struct.}$) représente 3 à 30%, de préférence 5 à 20%, en poids, desdites particules, pour une taille de celles-ci comprise entre 100 et 300 nm.

16. Latex selon l'une des revendications 1 à 15, caractérisé par le fait que la concentration en particules est comprise entre 10 et 65%, en particulier entre 40 et 55% en poids, du poids total de la dispersion.

17. Procédé de préparation d'un latex tel que défini à l'une des revendications 1 à 16, caractérisé par le fait qu'on prépare au moins une dispersion aqueuse de particules (méth)acryliques fluorées ($F_{struct.}$) de structure coeur-écorce ou coeur-couche(s) intermédiaire(s)-écorce, le ou les monomères (I) entrant dans la constitution de l'écorce desdites particules, qu'on mélange le cas échéant les dispersions obtenues entre elles, et qu'on mélange le cas échéant la ou les dispersions obtenues avec au moins une dispersion aqueuse de particules (méth)acryliques statistiques non fluorées ($NF_{stat.}$), ou bien qu'on prépare au moins une dispersion aqueuse de particules (méth) acryliques statistiques fluorées ($F_{stat.}$) en utilisant, comme comonomère, un ou des composés de formule (I), qu'on mélange le cas échéant les dispersions obtenues entre elles et qu'on mélange la ou les dispersions résultantes avec au moins une dispersion aqueuse de particules (méth)acryliques statistiques non fluorées ($NF_{stat.}$), toutes les dispersions aqueuses précitées étant effectuées par polymérisation en émulsion en milieu aqueux à un ou plusieurs stades selon le cas.

18. Procédé selon la revendication 17, caractérisé par le fait qu'on ajoute jusqu'à 0,5% en poids, notamment jusqu'à 0,3% en poids d'au moins un agent de transfert tel qu'un alkyl mercaptan ou l'acide thioglycolique par rapport aux monomères introduits lors de la polymérisation de l'écorce.

19. Compositions destinées à constituer un revêtement hydrophobe, tel qu'une peinture, dans le domaine du bâtiment, vernis et apprêt pour cuirs, apprêts pour textiles, vernis de protection pour bois, caractérisées par le fait qu'elles comportent au moins un latex tel que défini à l'une des revendications 1 à 16.

**Patentansprüche**

1. Fluorhaltiger (Meth)acryl-Latex, der aus einer Partikeldispersion oder einem Gemisch von Partikeldispersionen besteht, wobei diese Dispersionen durch mindestens einstufige Emulsionspolymerisation in wäßrigem Medium

hergestellt werden und wobei ein oder mehrere perfluorierte Monomere der Formel (I)

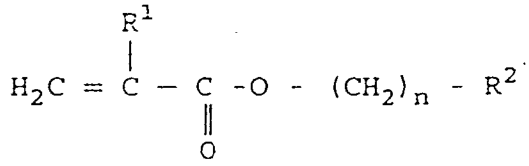

(I),

in der bedeuten:

- $R^1$ $CH_3$ oder H,
- $R^2$ eine perfluorierte $C_{1-10}$-Alkylgruppe und
- $0 < n \leq 4$,

als einziges fluorhaltiges Comonomer oder die als alleinige fluorhaltige Comonomere für die Erzeugung der Partikel verwendet werden und das/die in den in einer einzigen Stufe erzeugten Partikeln statistisch verteilt ist/sind oder in dem Mantel strukturierter Partikel vom Kern-Mantel-Typ oder Kern-Zwischenschicht(en)-Mantel-Typ, die bei einer Polymerisation in zwei Stufen bzw. mehr als zwei Stufen entstehen, statistisch verteilt ist/sind, wobei der Latex aus einer Dispersion dieser strukturierten Partikel ($F_{strukt.}$) oder einem Gemisch mindestens einer Dispersion von kein Fluor enthaltenden statistischen Partikeln ($NF_{stat.}$) und mindestens einer Dispersion dieser fluorhaltigen strukturierten Partikel ($F_{strukt.}$) und/oder mindestens einer Dispersion dieser fluorhaltigen statistischen Partikel ($F_{stat.}$) besteht, wobei das oder die Monomere der Formel (I) mindestens 80 Gew.-% des Mantels der fluorhaltigen strukturierten Partikeln ausmacht/ausmachen, wobei der Anteil der Monomere der Formel (I), bezogen auf die Gesamtheit der für die Bildung sämtlicher Partikel des Latex verwendeten Monomere, 1,8 bis 20 Gew.-% beträgt, wobei die Art und der Anteil der Monomere, aus denen die fluorhaltigen oder die kein Fluor enthaltenden statistischen Partikel sowie die verschiedenen Stufen der strukturierten Partikel zusammengesetzt sind, so ausgewählt sind, daß die Glasübergangstemperatur der Polymere, aus denen die statistischen Partikel oder die Stufen der strukturierten Partikel bestehen, kleiner als oder gleich 40 °C ist.

2. Latex nach Anspruch 1, dadurch gekennzeichnet, daß das Monomer (I) 2,2,2-Trifluorethyl(meth)acrylat ist.

3. Latex nach einem der Ansprüche 1 und 2, dadurch gekennzeichnet, daß der Anteil der Monomere der Formel (I), bezogen auf die Gesamtheit der für die Erzeugung sämtlicher Partikel des Latex verwendeten Monomere, im Bereich von 2 bis 10 Gew.-% liegt.

4. Latex nach einem der Ansprüche 1 bis 3, dadurch gekennzeichnet, daß die Art und der Anteil der Monomere, aus denen die fluorhaltigen und die kein Fluor enthaltenden statistischen Partikel sowie die verschiedenen Stufen der strukturierten Partikel zusammengesetzt sind, so ausgewählt sind, daß die Glasübergangstemperatur der Polymere, aus denen die statistischen Partikel oder die obengenannten Stufen der strukturierten Partikel bestehen, im Bereich von -5 bis 25 °C liegt.

5. Latex nach einem der Ansprüche 1 bis 4, dadurch gekennzeichnet, daß die Monomerenzusammensetzung der fluorhaltigen statistischen Partikel ($F_{stat.}$) oder des Mantels der fluorhaltigen strukturierten Partikel ($F_{strukt.}$) der folgenden Zusammensetzung entspricht, angegeben in Gewichtsprozent für insgesamt 100 Gew.-%:

- 20 - 80 %, insbesondere 35 - 70 %, mindestens eines Monomers (I),
- 20 - 80 %, insbesondere 20 - 55 %, mindestens eines (Meth)acryl- oder Vinylmonomers, mit dem ein Homopolymer mit einer niedrigen Glasübergangstemperatur im allgemeinen im Bereich von -80 bis -20 °C erzeugt werden kann,
- 0 - 30 %, insbesondere 0 - 15 %, mindestens eines (Meth)acryl-, Styrol- oder Vinylmonomers, mit dem ein Homopolymer mit einer hohen Glasübergangstemperatur im allgemeinen im Bereich von +10 bis 200 °C erzeugt werden kann,
- 0 - 10 %, insbesondere 0 - 2 %, mindestens eines Carboxy(meth)acrylmonomers,
- 0 - 3 %, insbesondere 0 - 2 %, mindestens eines vernetzenden (Meth)acrylmonomers und
- 0 - 5 %, insbesondere 0 - 2 %, mindestens eines hydrophilen (Meth)acrylmonomers.

6. Latex nach einem der Ansprüche 1 bis 5, dadurch gekennzeichnet, daß die Monomerenzusammensetzung der kein Fluor enthaltenden statistischen Partikel ($NF_{stat.}$) und des Kerns der fluorhaltigen strukturierten Partikel ($F_{strukt.}$) der folgenden Zusammensetzung entspricht, angegeben in Gewichtsprozent für insgesamt 100 Gewichtsteile:

- mindestens 20 %, insbesondere mindestens 40 % mindestens eines (Meth)acryl- oder Vinylmonomers, mit dem ein Homopolymer mit einer niedrigen Glasübergangstemperatur im allgemeinen im Bereich von -80 bis -20 °C erzeugt werden kann,
- mindestens 20 %, insbesondere mindestens 30 %, mindestens eines (Meth)acryl-, Styrol- oder vinylmonomers, mit dem ein Homopolymer mit einer hohen Glasübergangstemperatur im allgemeinen im Bereich von +10 bis 200 °C erzeugt werden kann,
- 0,5 - 10 %, insbesondere 0,5 - 2,5 %, mindestens eines Carboxy(meth)acrylmonomers,
- 0,3 - 5 %, insbesondere 0,5 - 3 %, mindestens eines vernetzenden (Meth)acrylmonomers; und im Falle eines Kerns von strukturierten Partikeln,
- 0 - 0,3 %, insbesondere 0 - 0,2 %, mindestens eines bifunktionellen Monomers für die Kompatibilisierung oder die Pfropfung für den Fall, daß es sich bei dem vernetzenden Monomer um N-Methylolacrylamid handelt.

7. Latex nach einem der Ansprüche 5 und 6, dadurch gekennzeichnet, daß das (Meth)acrylmonomer, mit dem ein Homopolymer mit einer niedrigen Glasübergangstemperatur im allgemeinen im Bereich von -80 bis -20 °C erzeugt werden kann, unter den Alkyl(meth)acrylaten ausgewählt ist, mit denen ein Homopolymer mit einer Glasübergangstemperatur im Bereich von -80 bis -20 °C erzeugt werden kann: Ethylacrylat, Butylacrylat, 2-Ethylhexylacrylat und Nonylacrylat.

8. Latex nach einem der Ansprüche 5 und 6, dadurch gekennzeichnet, daß das Vinylmonomer, mit dem ein Homopolymer mit einer niedrigen Glasübergangstemperatur im allgemeinen im Bereich von -80 bis -20 °C erzeugt werden kann, 2-Ethylvinylhexanoat ist.

9. Latex nach einem der Ansprüche 5 und 6, dadurch gekennzeichnet, daß das (Meth)acrylmonomer, mit dem ein Homopolymer mit einer hohen Glasübergangstemperatur im allgemeinen im Bereich von +10 bis 200 °C erzeugt werden kann, Methylmethacrylat ist.

10. Latex nach einem der Ansprüche 5 und 6, dadurch gekennzeichnet, daß das Vinylmonomer, mit dem ein Homopolymer mit einer hohen Glasübergangstemperatur im allgemeinen im Bereich von +10 bis 200 °C erzeugt werden kann, Vinylacetat ist.

11. Latex nach einem der Ansprüche 5 und 6, dadurch gekennzeichnet, daß es sich bei dem Carboxy(meth)acrylmonomer um Acrylsäure oder Methacrylsäure handelt.

12. Latex nach einem der Ansprüche 5 und 6, dadurch gekennzeichnet, daß das vernetzende Monomer unter hydrophilen Vernetzungsmitteln wie N-Methylol (Meth)acrylamid und Isobutoxymethylacrylamid und hydrophoben Vernetzungsmitteln wie Ethylenglykoldi(meth)acrylat, Butandioldi(meth)acrylat, Hexandioldi(meth)acrylat und (Meth) acrylsäureanhydrid ausgewählt ist.

13. Latex nach Anspruch 5, dadurch gekennzeichnet, daß das hydrophile (Meth)acrylmonomer Ethylimidazolidon(meth)acrylat oder Acrylamid ist.

14. Latex nach Anspruch 6, dadurch gekennzeichnet, daß das Monomer für die Kompatibilisierung oder die Pfropfung unter Diallylmaleaten, Allyl(meth)acrylat und Butandioldimethacrylat ausgewählt ist.

15. Latex nach einem der Ansprüche 1 bis 14, dadurch gekennzeichnet, daß der Gewichtsanteil des Mantels der strukturierten fluorhaltigen Partikel ($F_{strukt.}$) 3 bis 30 Gew.-%, vorzugsweise 5 bis 20 Gew.-%, dieser Partikel für eine Größe dieser Partikel im Bereich von 100 bis 300 nm beträgt.

16. Latex nach einem der Ansprüche 1 bis 15, dadurch gekennzeichnet, daß die Partikelkonzentration 10 bis 65 Gew.-%, insbesondere 40 bis 55 Gew.-%, des Gesamtgewichts der Dispersion beträgt.

17. Verfahren zur Herstellung eines wie in einem der Ansprüche 1 bis 16 definierten Latex, dadurch gekennzeichnet, daß mindestens eine wäßrige Dispersion aus fluorhaltigen (Meth)acrylpartikeln ($F_{strukt.}$) mit Kern-Mantel- oder

Kern-Zwischenschicht(en)-Mantel-Struktur hergestellt wird, wobei das oder die Monomere (I), die in der Struktur des Mantels dieser Partikel enthalten ist/sind, daß gegebenenfalls die erhaltenen Dispersionen miteinander vermischt werden und daß gegebenenfalls die erhaltene Dispersion oder die erhaltenen Dispersionen mit mindestens einer wäßrigen Dispersion von kein Fluor enthaltenden statistischen (Meth)acrylpartikeln ($NF_{stat.}$) vermischt wird/werden oder daß mindestens eine wäßrige Dispersion von fluorhaltigen statistischen (Meth)acrylpartikeln ($F_{stat.}$) hergestellt wird, indem als Comonomer eine oder mehrere Verbindungen der Formel (I) verwendet werden, daß gegebenenfalls die erhaltenen Dispersionen miteinander vermischt werden und daß die resultierende Dispersion oder die resultierenden Dispersionen mit mindestens einer wäßrigen Dispersion von kein Fluor enthaltenden statistischen (Meth)acrylpartikeln ($NF_{stat.}$) vermischt wird/werden, wobei alle vorgenannten wäßrigen Dispersionen durch Emulsionspolymerisation in einem wäßrigen Medium in einem oder mehreren Schritten hergestellt werden.

**18.** Verfahren nach Anspruch 17, dadurch gekennzeichnet, daß bis zu 0,5 Gew.-%, insbesondere bis zu 0,3 Gew.-% mindestens eines Transfermittels, wie z.B. ein Alkylmercaptan oder Thioglykolsäure, bezogen auf die Monomere, die bei der Polymerisation des Mantels eingebracht werden, zugegeben werden.

**19.** Zusammensetzungen, die für die Bildung eines hydrophoben Überzugs vorgesehen sind, wie z.B. eines Farbanstrichs, eines Überzugs im Baugewerbe, eines Lacks oder einer Appretur für Leder, Appreturen für Textilien, Holzschutzlacke, dadurch gekennzeichnet, daß sie mindestens ein Latex, das wie in einem der Ansprüche 1 bis 16 definiert ist, enthalten.

**Claims**

**1.** Fluorinated (meth)acrylic latex consisting of a dispersion of particles or of a mixture of dispersions of particles, these dispersions being obtained by emulsion polymerization in an aqueous medium, in at least one stage, wherein one or more perfluorinated monomer(s) of formula (I) :

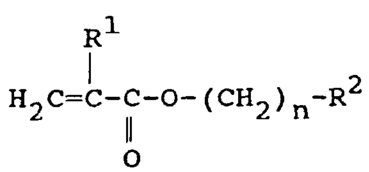

(I)

in which :

- $R^1$ represents $CH_3$ or H ;
- $R^2$ represents a perfluorinated $C_1$-$C_{10}$ alkyl radical ; and
- $0 < n \leq 4$,

has/have been used as sole fluorinated commonomer(s) for the formation of the particles, and which is/are distributed statistically in particles formed in one stage or distributed statistically in the shell of structured particles of the core-shell or core-intermediate layer(s)-shell type resulting from a polymerization in two stages and in more than two stages, respectively, the said latex consisting of a dispersion of the said structured particles ($F_{struct.}$) or of a mixture of at least one dispersion of unfluorinated statistical particles ($NF_{stat.}$) and at least one dispersion of the said fluorinated structured particles ($F_{struct.}$) and/or at least one dispersion of fluorinated statistical particles ($F_{stat.}$), the monomer or monomers of formula (I) representing less than 80% by weight of the shell of the fluorinated structured particles, the proportion of monomers of formula (I) relative to the collective monomers used to form all of the particles of the said latex being between 1.8 and 20% by weight, the nature and proportion of the monomers participating in the composition of the fluorinated or unfluorinated statistical particles, as well as of the different stages of the structured particles, being chosen in such a way that the glass transition temperature of the polymers of which the said statistical particles or the said stages of the structured particles are composed is below or equal to 40°C.

**2.** Latex according to Claim 1, characterised in that the monomer (I) is 2,2,2-trifluoroethyl (meth)acrylate.

**3.** Latex according to either of Claims 1 and 2, characterized in that the proportion of monomers of formula (I) relative

to the collective monomers used to form all of the particles of the said latex is between 2 and 10% by weight.

4. Latex according to one of Claims 1 to 3, characterized in that the nature and proportion of the monomers participating in the composition of the fluorinated or unfluorinated statistical particles, as well as of the different stages of the structured particles, are chosen in such a way that the glass transition temperature of the polymers of which the said statistical particles or the said stages of the structured particles are composed is between -5 and 25°C.

5. Latex according to one of Claim 1 to 4, characterized in that the monomer composition of fluorinated statistical particles ($F_{stat.}$) or of the shell of fluorinated structured particles ($F_{struct.}$) is as follows, by weight, for a total of 100% by weight :

- 20-80%, in particular 35-70%, of at least one monomer (I) :
- 20-80%, in particular 20-55%, of at least one (meth)acrylic or vinyl monomer capable of yielding a homopolymer having a low glass transition temperature generaly of between -80 and -20°C ;
- 0-30%, in particular 0-15%, of at least one (meth)acrylic, styrene or vinyl monomer capable of yielding a homopolymer having a high glass transition temperature generally of between +10 and 200°C ;
- 0-10%, in particular 0-2%, of at least one carboxylic (meth)acrylic monomer ;
- 0-3%, in particular 0-2%, of at least one crosslinking (meth)acrylic monomer ; and
- 0-5% , in particular 0-2%, of at least one hydrophilic (meth)acrylic monomer.

6. Latex according to one of Claims 1 to 5, characterized in that the monomer composition of unfluorinated statistical particles ($NF_{stat.}$) and of the core of fluorinated structured particles ($F_{struct.}$) is as follows, by weight, for a total of 100 parts by weight :

- at least 20%, in particular at least 40%, of at least one (meth)acrylic or vinyl monomer capable of yielding a homopolymer having a low glass transition temperature, generally of between -80 and -20°C ;
- at least 20%, in particular at least 30%, of at least one (meth)acrylic, styrene or vinyl monomer capable of yielding a homopolymer having a high glass transition temperature generally of between +10 and 200°C ;
- 0.5-10%, in particular 0.5-2.5%, of at least one carboxylic (meth)acrylic monomer ;
- 0.3-5%, in particular 0.5-3% of at least one crosslinking (meth)acrylic monomer ; and, in the case of the core of structured particles,
- 0-0.3%, in particular 0-0.2% of at least one bifunctional compatibilizing or grafting monomer in the case where the crosslinking monomer is N-methylolacrylamide.

7. Latex according to either of Claims 5 and 6, characterized in that the (meth)acrylic monomer capable of yielding a homopolymer having a low glass transition temperature generally of between -80 and -20°C is chosen from alkyl (meth)acrylates giving homopolymers having a glass transition temperature of between -80 and -20°C : ethyl acrylate, butyl acrylate, 2-ethylhexyl acrylate and nonyl acrylate.

8. Latex according to either of Claims 5 and 6, characterized in that the vinyl monomer capable of yielding a homopolymer having a low glass transition temperature generally of between -80 and -20°C is vinyl 2-ethylhexanoate.

9. Latex according to either of Claims 5 and 6, characterized in that the (meth)acrylic monomer capable of yielding a homopolymer having a high glass transition temperature generally of between +10 and 200°C is methyl methacrylate.

10. Latex according to either of Claims 5 and 6, characterized in that the vinyl monomer capable of yielding a homopolymer having a high glass transition temperature generally of between +10 and 200°C is vinyl acetate.

11. Latex according to either of Claims 5 and 6, characterized in that the carboxylic (meth)acrylic monomer is acrylic acid or methacrylic acid.

12. Latex according to either of Claims 5 and 6, characterized in that the crosslinking monomer is chosen from hydrophilic crosslinking agents such a N-methylol-(meth)acrylamide and isobutoxymethylacrylamide, and hydrophobic crosslinking agents such as ethylene glycol di(meth) acrylate, butanediol di(meth)acrylate, hexanediol di(meth) acrylate and methacrylic anhydride.

13. Latex according to Claim 5, characterized in that the hydrophilic (meth)acrylic monomer is ethylimidazolidone

(meth)acrylate or acrylamide.

**14.** Latex according to Claim 6, characterized in that the compatibilizing or grafting monomer is chosen from diallyl maleates, allyl (meth)acrylate and butanediol dimethacrylate.

**15.** Latex according to one of Claims 1 to 14, characterized in that the weight proportion of the shell of the structured fluorinated particles ($F_{struct.}$) represents 3 to 30%, preferably 5 to 20%, by weight of the said particles, for a size of the latter of between 100 and 300 nm.

**16.** Latex according to one of Claims 1 to 15, characterized in that the particle concentration is between 10 and 65%, especially between 40 and 55%, by weight of the total weight of the dispersion.

**17.** Process for preparing a latex as defined in one of Claims 1 to 16, characterized in that at least one aqueous dispersion of fluorinated (meth)acrylic particles ($F_{struct.}$) of core-shell or core-intermediate layer(s)-shell structure is prepared, the monomer of monomers (I) participating in the constitution of the shell of the said particles, in that the dispersions obtained are, where appropriate, mixed with one another, and in that the dispersion of dispersions obtained is/are, where appropriate, mixed with at least on aqueous dispersion of unfluorinated statistical (meth) acrylic particles ($NF_{stat.}$), or alternatively in that at least one aqueous dispersion of fluorinated statistical (meth) acrylic particles ($F_{stat.}$) is prepared using as comonomer one or more compounds of formula (I), in that the dispersions obtained are, where appropriate, mixed with one another and in that the resulting dispersion or dispersions is/are mixed with at least one aqueous dispersion of unfluorinated statistical (meth)acrylic particles ($NF_{stat.}$), all the abovementioned aqueous dispersions being made by emulsion polymerization in an aqueous medium in one or more stages depending on the case.

**18.** Process according to Claim 17, characterized in that up to 0.5% by weight, in particular up to 0.3% by weight, of at least one transfer agent such as an alkyl mercaptan or thioglycolic acid, relative to the monomers introduced, is added during the polymerization of the shell.

**19.** Compositions intended to constitute a hydrophobic coating, such as a paint, in the building field, varnish and dressing for leathers, dressings for textiles or protective varnish for wood, characterized in that they contain at least one latex as defined in one of Claims 1 to 16.